# EUROPEAN PATENT SPECIFICATION

(11) **EP 2 693 146 B1**
(45) Date of publication and mention of the grant of the patent: **16.09.2015**
(21) Application number: 13460043.6
(22) Date of filing: 02.07.2013
(51) Int. Cl.: F28D 7/02, F28D 21/00, F28F 1/08

(54) **Heat exchanger for sewer riser**
Wärmetauscher für Abwassersteigrohr
Échangeur de chaleur pour colonne montante d'égout

(30) Priority: 03.08.2012 PL 40023412
(43) Date of publication of application: 05.02.2014
(73) Proprietor: Dworek Polski Sp.J., 05-540 Zalesie Gorne (PL)
(72) Inventor: Kozinski, Jacek, 05-540 Zalesie Górne (PL)
(74) Representative: Woznicki, Jerzy

(56) References cited:
- EP-A1- 2 189 745
- WO-A1-2004/068054
- WO-A2-2010/139334
- DE-U1-202011 003 667
- US-A- 5 487 423

## Description

The object of invention is a heat exchanger for sewer riser, intended for sewer risers with gravity flow of greywater.

Structures of counterflow heat exchangers for heat recovery from waste water, composed of a helical pipe coil placed in a tank, through which waste water flows, are known. This type of heat exchangers is not suitable for use in sewer risers.

A heat exchanger in the form of a double-walled tube, intended for heat recovery from greywater, such as water flowing from faucet, dishwasher, washing machine, bath, shower or swimming pool, is known from patent application no DE 102008017380. The heat exchanger comprises an inner pipe, made of a thermally conductive material, placed in an outer pipe. Waste water is discharged through the inner pipe, and counterflow-heated water flows through an inner chamber formed between the inner pipe and the outer pipe. The heat exchanger has, on its inlet and outlet sides, typical flanged joints used in sewerage systems made of PVC. The inner chamber is provided with inlet and outlet collectors for the reheated water. WO 2004/068054 discloses a heat exchanger having the features in the preamble of claim 1.

In sewer risers of a non-pressure system with gravity flow, the waste water flowing down occupies only a small part of the cross section, and the remaining part is occupied by the air. Lack of increased pressure allows the use of bell-and-spigot pipe joints and thin-walled PVC pipes. In vertical sewer pipes, only a part of the liquid flowing down adheres directly to the walls. The remaining part, as a result of local flow concentrations, gains a high velocity and due to kinetic energy gained detaches from the walls and falls freely inside the pipe, which reduces the efficiency of the heat exchange through the walls.

The purpose of the invention is to slow down the flow of greywater in the exchanger and to increase the efficiency of heat recovery in the sewer riser with gravity flow of waste water.

The heat exchanger for sewer riser, composed of a vertical sewer pipe for greywater and of a helical pipe coil for heated water, according to the invention, is **characterised in that** the helical pipe coil constitutes a metal insert mounted vertically inside the sewer pipe together with a short inner pipe, on which the upper part of the pipe coil is wound, and the helical line of the pipe coil wound on the short inner pipe has its pitch greater than the pitch of the helical line of the pipe coil below the short inner pipe.

Preferably, the helical pipe coil is made of a corrugated pipe, in particular a steel one.

Preferably, the short inner pipe has a diameter in a range of a half to three quarters of the diameter of the sewer pipe, in which the helical pipe coil is mounted.

The heat exchanger according to the invention can be made in a typical sewer pipe used in sewer risers. The purpose of the insert is to increase the hydraulic resistance and evenly distribute the flow around the perimeter of the riser with the use of the Coanda effect, i.e. the tendency of a stream of gases or liquids to adhere to the nearest surface. The insert allows for elimination of local flow concentrations and for deceleration of liquid streams to such an extent that the Coanda forces are able to maintain all its volume adjacent to the wall of the sewer pipe. As a result, detaching of greywater streams and their free falling down in the sewer riser, within the section in which the insert is placed, is completely eliminated, which increases the heat exchange efficiency of the exchanger. This efficiency can be increased by making the pipe coil of a corrugated pipe.

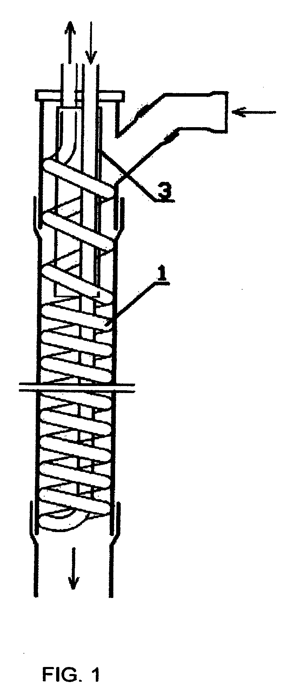

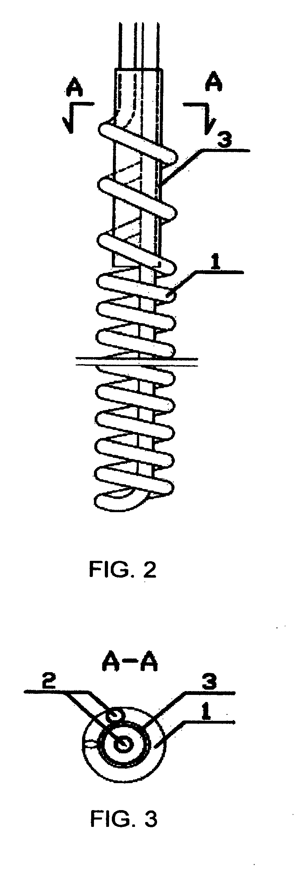

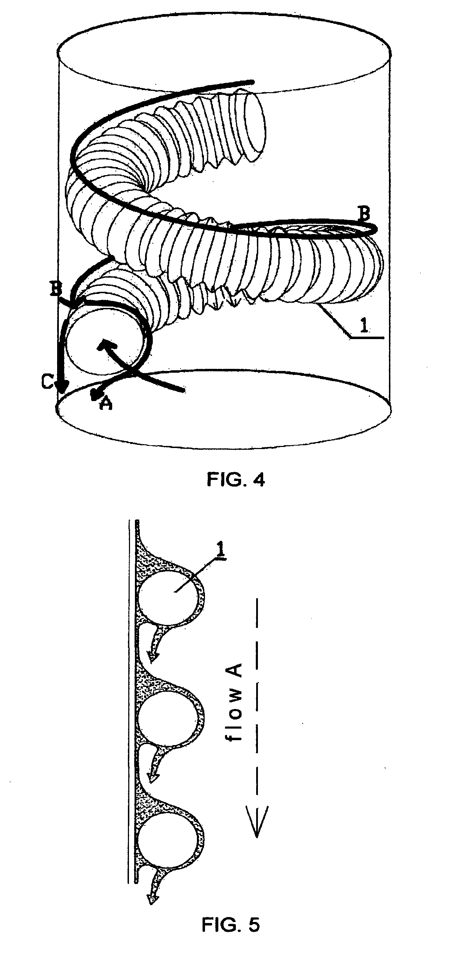

The object of invention is explained in an embodiment in a drawing, in which fig. 1 shows an exchanger with an insert in a side view of an assembly scheme, fig. 2 shows the insert in a side view, fig. 3 shows a cross section A-A of the insert of fig. 2, fig. 4 shows a portion of a pipe coil made of a corrugated pipe enclosed in a sewer pipe, and fig. 5 illustrates a flow of liquid next to a wall portion of the sewer pipe and the pipe coil in a radial plane.

As shown in fig. 1 and fig. 2, the heat exchanger for sewer riser is composed of a vertical sewer pipe and of a helical pipe coil 1 placed inside the sewer pipe. The sewer pipe is made of PVC segments joint together in a bell-and-spigot manner. The upper segment is provided with a lateral greywater inlet indicated by a horizontal arrow. The lower arrow indicates the direction of waste water flow in the sewer riser. The upper arrows indicate the direction of the heated water flow, flowing through the pipe coil. The helical pipe coil 1 constitutes a metal insert mounted vertically inside the sewer pipe together with a short inner pipe 3, on which the upper part of the pipe coil is wound. The short inner pipe 3 is placed in the axis of the sewer pipe at the height of the lateral greywater inlet. The helical line of the pipe coil wound on the short inner pipe 3 has its pitch greater than the pitch of the helical line of the pipe coil below the short inner pipe 3. Thus, the angle of profile inclination of the pipe coil wound on the short inner pipe 3 with respect to the riser is greater than in the lower part of the insert.

The helical pipe coil 1 has two ends 2 directed upward. The relative axial position of the pipe coil together with its ends 2 and of the inner pipe 3 is shown in fig. 3.

The purpose of the upper part of the insert, with the pipe coil having greater pitch of its helical line, is an initial deceleration of the inflowing liquid and its even distribution around the riser perimeter. This purpose is achieved by a pipe coil portion having greater angle of profile inclination of the pipe, from which the pipe coil is bent, the portion cooperating with the short inner pipe 3. This pipe prevents the rushing liquid from flowing down in the middle area. The short inner pipe 3 reaches up to the place, where the flow is sufficiently slowed down and sufficiently evenly distributed around the parameter. In order to provide a reserve section for wastewater flowing down, the short inner pipe 3 has a diameter in a range of a half to three quarters of the diameter of the sewer pipe, in which the helical pipe coil 1 is mounted. The insert used increases hydraulic resistance at the wall of the sewer pipe, which slows down the wastewater flow. Thanks to slowing down the wastewater flow and to the low kinetic energy of liquid streams, Coanda effect occurs, manifesting itself by that the liquid is maintained at the walls of the helical pipe coil 1 so that having washed the pipe coil, it returns towards the wall of the sewer pipe. Further slowing down the liquid flow and increasing the exchanger efficiency can be obtained with the use of the helical pipe coil 1 made of a corrugated pipe, seen in fig. 4.

As shown in fig. 4, in the exchanger with the helical pipe coil 1 made of a corrugated pipe, the entire volume of the liquid flows down with a thin film on its surface, thereby resulting in the creation of an external flow C between the notches of the pipe coil and the surface of the riser. The internal flow A prevents the liquid streams from detaching and from falling down freely. The spiral flow B along the bent pipe of the pipe coil and the external flow C evenly distribute the liquid flow on the riser parameter. This prevents the local concentration of liquid. The flows intersect, providing permanent turbulent mixing of the water. Effect of the internal flow A on shaping of liquid streams flowing down in a radial plane of the sewer pipe is shown in fig. 5. All the three flows together make the majority of the surface of the inner pipe to be washed by the liquid flowing down, and the large heat exchange surface provides high efficiency of the whole system of the exchanger.

In the exchanger according to the invention, the pipe coil may be made of a copper or steel pipe. The use of a corrugated, thin-walled steel pipe is more preferable because such a pipe is less rigid than the copper one. This allows to roll it do a diameter slightly larger than required and to place it in the riser at a slight compression resulting from a mounting torsion. As a result of instantaneous reduction of outer diameter of the pipe coil, it may be inserted into the riser sewer pipe. Following the expansion, the pipe coil is increased, which ensures its adherence to the wall of the sewer pipe. The spring forces are so small that they cannot damage the typical riser made of PVC, and the clearance dimension for the flow type C is precisely controlled. The reserve section left for the wastewater flowing down inside the pipe coil ensures that the riser will not be clogged due to contamination.

The solution according to the invention is particularly suitable for use in hot-water systems in detached houses. This is a counterflow exchanger, and therefore it only works at the time the hot water is taken up, for example when using a shower or a wash basin. As a result, it will not work in the system with a bathtub, if the water, while draining, is not be simultaneously taken up. The exchanger is intended for energy recovery from greywater, i.e. non-fecal waste water. Consequently, it requires separation of the sewer riser for shower and wash basin from the riser for WC.

## Claims

1. Heat exchanger for sewer riser, composed of a vertical sewer pipe for greywater and of a helical pipe coil for heated water, wherein the helical pipe coil (1) constitutes a metal insert mounted vertically inside the sewer pipe together with an inner pipe (3), **characterised in that** the inner pipe (3) is short so that on the short inner pipe (3) the upper part of the pipe coil is wound, and the helical line of the pipe coil wound on the short inner pipe (3) has its pitch greater than the pitch of the helical line of the pipe coil below the short inner pipe (3), wherein the short inner pipe (3) has a diameter in a range of a half to three quarters of the diameter of the sewer pipe, in which the helical pipe coil (1) is mounted.

2. Heat exchanger according to claim 1, wherein the helical pipe coil (1) is made of a corrugated pipe, in particular a steel one.

## Patentansprüche

1. Wärmetaucher für Abwassersteigrohr bestehend aus einem vertikalen Kanalisationsrohr für graues Abwasser und aus einem Schraubenschlangenrohr für das erwärmte Wasser, das eine Metalleinlage, die im Inneren des Kanalisationsrohrs samt einem inneren Rohr gesetzt wird, bildet - der sich dadurch auszeichnet, dass das Innenrohr (3) kurz ist und an dieses kurze Innenrohr (3) ist ein Oberabschnitt des Schlangenrohres umwickelt und die Schraubenlinie des Schlangenrohres, das an dem kurzen Rohr umwickelt wird (3), einen Sprung, der größer als der Sprung der Schraubenlinie des Schlangenrohres unten dem kurzen Innenrohr ist, hat, und dabei hat das kurze Innenrohr (3) einen Durchmesser im Bereich von der Mitte bis zum Dreiviertel des Kanalisationsrohrdurchmessers, in dem das Schraubenschlangenrohr gesetzt wird (1).

2. Der Wärmetaucher gemäß Anspruch 1, **dadurch gekennzeichnet, dass** das Schraubenschlangenrohr (1) aus einem Wellblechrohr, insbesondere aus einem Stahlwellblechrohr erzeugt wird.

## Revendications

1. L'échangeur de chaleur pour colonne montante d'égout qui est composé d'un tube de canalisation vertical pour les eaux usées grises et d'un serpentin à vis pour l'eau chauffée, et ce serpentin à vis constitue un insert en métal qui est placé à l'intérieur du tube de canalisation ensemble avec le tube intérieur, est caractéristique par le fait que le tube intérieur (3) est plus court, et sur ce tube intérieur court (3) le segment supérieur du serpentin est enroulé et l'hélice du serpentin enroulé autour du tube intérieur court (3) a un saut pas qui est plus grand que le saut pas de l'hélice du serpentin au-dessous du tube intérieur court (3), et en même temps le tube intérieur court (3) a un diamètre dans l'étendue à partir de la moitié jusqu'aux trois quarts du diamètre du tube de canalisation dans lequel est placé le serpentin à vis (1).

2. L'échangeur selon la revendication 1, se **caractérise par le fait que** le serpentin à vis (1) est fait avec un tube crénelé, en particulier avec un tube crénelé en acier.
